# EUROPÄISCHE PATENTSCHRIFT

(11) **EP 2 273 243 B1**
(45) Veröffentlichungstag und Bekanntmachung des Hinweises auf die Patenterteilung: **04.03.2015**
(21) Anmeldenummer: 10006942.6
(22) Anmeldetag: 06.07.2010
(51) Int. Cl.: G01G 21/23, G01G 19/56

(54) **Küchenmaschine**
Kitchen appliance
Machine de cuisine

(30) Priorität: 06.07.2009 DE 102009031990
(43) Veröffentlichungstag der Anmeldung: 12.01.2011
(73) Patentinhaber: Soehnle Industrial Solutions GmbH, 71522 Backnang (DE)
(72) Erfinder: Gerster, Stephan, 53343 Wachtberg-Pech (DE); Schurr, Michael, 71540 Murrhardt (DE); Stahl, Albrecht, 71560 Sulzbach (DE)
(74) Vertreter: Hoffmann, Jürgen

(56) Entgegenhaltungen:
- WO-A1-2004/003640
- DE-A1- 10 006 225
- GB-A- 2 434 740

## Beschreibung

Die Erfindung betrifft eine Küchenmaschine, insbesondere eine Küchenmaschine, mit einer Geräteunterseite.

Die Erfindung betrifft außerdem ein Verfahren zum Herstellen einer Küchenmaschine.

Küchengeräte dieser Art werden für verschiedenste Anwendungszwecke und in einer Vielzahl von Ausführungsformen vertrieben und benutzt. Bei einigen dieser Geräte sind zur Ermittlung oder Überwachung des Gewichtes die Standfüße mit Wägezellen ausgerüstet, wobei die Wägezellen selbst in dem Küchenmaschine angeordnet sind und die Standfüße durch Öffnungen im Boden des Gerätegehäuses ragen. Die übrigen Bauteile des Gerätes sind zumeist über den Wägezellen angeordnet und werden bei der Herstellung entlang einer von unten nach oben verlaufenden Aufbaurichtung montiert. Nachteilig an diesem Aufbau ist, dass die Wägezellen erst nach dem Ausbau aller übrigen Bauteile repariert oder ausgetauscht werden können. Außerdem kann der Einbau der übrigen Bauteile in der Regel erst dann erfolgen, wenn die einzelnen Wägezellen montiert, aufeinander abgestimmt und kalibriert sind.

Aus WO 2004/003640 A1 ist eine Küchenwaage bekannt, die ein Gehäuse aufweist. Das Gehäuse weist einen Hauptbereich und einen Zusatzbereich auf. Der Hauptbereich besteht aus einer kreisförmigen Deckenwand und aus einer etwa kegelstumpfförmig verlaufenden Seitenwand. Auf die Deckenwand ist ein Behälter aufsetzbar, der zum Aufnehmen von zu wiegendem Gut vorgesehen ist. Zum Ermitteln des Gewichts von in dem Behälter enthaltenen, zu wiegendem Gut ist ein kreisringförmiges Chassis mit vier einzelnen Füßen vorgesehen. In jedem Fuß ein Sensor angeordnet, der nach dem Dehnungmessstreifen-Prinzip arbeitet.

Aus DE 100 06 225 A1 ist eine Personenwaage bekannt, bei der mindestens drei Wiegebalken vorgesehen sind, an deren einen Enden Standfüße angeordnet sind und deren andere Enden miteinander verbunden sind. In die Wiegebalken sind Messzellen integriert. Innerhalb der Messzellen bilden die Wiegebalken eine Lastaufnahmefläche.

Aus GB 2 434 740 A ist eine Küchenmaschine mit einer Wiegefunktion bekannt. Die Küchenmaschine weist zwei einzelne, separat in einem Gehäuse der Küchenmaschine montierte Wägezellen auf.

Es ist die Aufgabe der vorliegenden Erfindung eine Küchenmaschine anzugeben, welche eine Möglichkeit zur Kraftmessung, insbesondere zur Gewichtsmessung, bereit stellt und welche schneller herstellbar und schneller und einfacher reparierbar ist.

Die Aufgabe wird durch eine Küchenmaschine gelöst, welche dadurch gekennzeichnet ist, dass an der Geräteunterseite ein Messrahmen, der Kraftaufnehmer aufweist, montiert ist oder montierbar ist.

Es ist eine weitere Aufgabe der vorliegenden Erfindung ein Verfahren zum Herstellen einer Küchenmaschine anzugeben, das eine schnellere Herstellung und ein schnelleres Reparieren bietet.

Diese Aufgabe wird durch ein Verfahren gelöst, das dadurch gekennzeichnet ist, dass an die Geräteunterseite ein Messrahmen, der Kraftaufnehmer aufweist, montiert wird und weitere Bauteile nacheinander entlang einer Aufbaurichtung von unten nach oben eingebaut werden, wobei der Messrahmen entgegen der Aufbaurichtung von unten angebaut wird.

Die Erfindung hat den Vorteil, dass der Messrahmen - im Gegensatz zu einzeln im Gehäuse montierten Kraftaufnehmern - schnell und einfach montiert und demontiert werden kann. Von ganz besonderem Vorteil ist die Erfindung hinsichtlich der Tatsache, dass der Messrahmen unabhängig zur allgemeinen Aufbaurichtung der übrigen Bauteile der Küchenmaschine von unten an die Geräteunterseite montiert ist bzw. montierbar ist. Bei der Herstellung der Küchenmaschine muss demgemäß keine Rücksicht auf den übrigen Montagezustand genommen werden; bei der Reparatur der Wiegeeinrichtung können alle übrigen Bauteile im montierten Zustand verbleiben, was die Reparaturzeit dramatisch verkürzt. Beispielsweise verkürzt sich die Reparaturzeit bei einer Haushaltsküchenmaschine von ca. zwei Stunden auf weniger als 10 Minuten.

Der Messrahmen kann in erfindungsgemäßer Weise als separat montierbares Modul ausgebildet sein. Bei einer besonders vorteilhaften Ausführungsform ist vorgesehen, dass die Kraftaufnehmer derart aufeinander abgestimmt und/oder derart kalibriert und/oder derart verschaltet sind, dass vom Messrahmen Messsignale ausgehen, die ohne zusätzliche Kalibrations- oder Abgleichvorgänge auswertbar sind. Diese Ausführungsform hat insbesondere den Vorteil, dass der Messrahmen vorgefertigt werden kann und als vorgefertigtes Modul schnell und effizient - insbesondere auch nachträglich - an die Küchenmaschine montierbar ist. Hierdurch ist zusätzlich die Möglichkeit eröffnet, bereits bestehende Geräte nachträglich mit einem Messrahmen auszurüsten. Beispielsweise könnten generell sämtliche Geräte einer Serie mit einer Auswerteelektronik zum Empfangen von Messsignalen ausgerüstet sein, jedoch der Messrahmen als optionales Bauteil angeboten werden.

Bei einer besonders kompakt ausführbaren Ausführung weist der Messrahmen zumindest eine Ausnehmung oder zumindest eine Aussparung auf, in die bzw. in der zumindest ein vorstehendes Teil der Geräteunterseite positioniert ist und/oder positionierbar ist. Hierdurch wird einerseits Bauhöhe gespart, zusätzlich kann die zumindest eine Ausnehmung oder die zumindest eine Aussparung auch als mechanische Führung zum positionsgenauen Montieren des Messrahmens dienen.

Bei einer hinsichtlich geringer Aufbauhöhe besonders vorteilhaften Ausführung weist die Geräteunterseite Aussparungen oder Ausnehmungen auf, in die bewegliche Bauteile der Kraftaufnehmer einführbar sind. Insbesondere kann vorgesehen sein, dass die Geräteunterseite Aussparungen oder Ausnehmungen aufweist, in die bewegliche Bauteile der Kraftaufnehmer durch Gewichtsbelastung des Messrahmens eintauchen. Hierdurch wird in erfindungsgemäßer Weise erreicht, dass die Kraftaufnehmer sich bei Belastung wie vorgesehen ohne Behinderung verbiegen oder verformen können ohne dass hierfür ein Ausgleichabstand zwischen Geräteunterseite und Messrahmen vorgesehen werden muss.

Bei einer besonders standsicheren und kostengünstigen Ausführung weist der Messrahmen genau drei Kraftaufnehmer auf. Diese können beispielsweise an den Ecken eines gedachten - vorzugsweise gleichseitigen - Dreiecks angeordnet sein. Bei einer anderen Ausführungsform weist der Messrahmen genau vier Kraftaufnehmer auf, die beispielsweise an den Ecken eines gedachten Vierecks, insbesondere eines Quadrates, angeordnet sein können.

Es ist einer modulartigen Bauweise zuträglich, dass der Messrahmen des erfindungsgemäßen Küchengerätes einen Halterahmen aufweist, an dem die Kraftaufnehmer befestigt sind. Insbesondere kann hinsichtlich einer geringen Bauhöhe vorgesehen sein, dass der Halterahmen eine Oberseite aufweist und dass Teile der Kraftaufnehmer bei Gewichtsbelastung des Halterahmens über die Oberseite hinaus nach oben stehen und ggf. in Öffnungen der Geräteunterseite eintauchen.

Grundsätzlich ist weitgehend jeder Typ von Kraftaufnehmer geeignet. Hinsichtlich der Realisierung einer besonders geringen Bauhöhe sind jedoch Kraftaufnehmer, die als Planarwägezellen ausgebildet sind und/oder solche, deren Biegekörper aus einem Flachmaterial gestanzt oder geschnitten sind, von ganz besonderem Vorteil. Vorzugsweise sind die Biegekörper derart Geformt, dass daran befestigte Standfüße parallel verschwenkbar geführt sind.

Bei einer besonderen Ausführungsform der erfindungsgemäßen Küchenmaschine ist eine Auswertevorrichtung vorgesehen, die von den Kraftaufnehmern direkt oder indirekt analoge Messwerte und/oder digitale Messsignale empfängt. Die Messsignale können beispielsweise per Funk oder über eine oder mehrere elektrische Leitungen übertragen werden.

Von ganz besonderem Vorteil ist eine Ausführungsform, bei der eine elektronische Einrichtung, die zur Steuerung oder Überwachung von einer Wiegefunktion verschiedenen Funktion der Küchenmaschine, wie beispielsweise einer Rührfunktion, einer Backfunktion, einer Zeitmessfunktion oder einer Häckselfunktion, zusätzlich auch als Auswertevorrichtung für die vom Messrahmen ausgehenden Messsignale dient. In ähnlicher Weise kann auch vorgesehen sein, dass eine Anzeigevorrichtung außer zur Anzeige eines Gewichtswertes zusätzlich zum Anzeigen anderer Informationen, beispielsweise eine Temperatur, eines Zeitraumes, einer Zutatenliste oder einer Uhrzeit, dient und/oder dass ein Bedienknopf außer zum Bedienen und/oder Steuern des Messrahmens und/oder der Auswertevorrichtung und/oder der Anzeigevorrichtung zusätzlich zum Steuern und/oder Auswählen von anderen Funktionen der Küchenmaschine dient.

Alternativ oder zusätzlich kann jedoch auch vorgesehen sein, dass das Küchenmaschine einen speziell dem Messrahmen bzw. einer Wiegefunktion zugeordnete Anzeige und/oder einen oder mehrere speziell dem Messrahmen bzw. einer Wiegefunktion zugeordneten Bedienknopf bzw. Bedienknöpfe aufweist.

Der Bedienknopf dient vorzugsweise zum Bedienen und/oder Steuern des Messrahmens und/oder der Auswertevorrichtung und/oder der Anzeigevorrichtung.

Insbesondere kann vorgesehen sein, dass die Auswertevorrichtung und/oder die Anzeigevorrichtung und/oder der Bedienknopf oberhalb des Gerätebodens angeordnet sind und dass der Messrahmen unterhalb des Gerätebodens angeordnet ist. Hierdurch wird erreicht, dass der Messrahmen vollkommen unabhängig von der Geräteelektronik montierbar und demontierbar ist. Je nach Art der Messsignalübertragung ist ggf. lediglich eine Datenleitung - vorzugsweise mittels einer Steckverbindung - anzuschließen oder abzukoppeln.

Insbesondere kann vorgesehen sein, dass die Küchenmaschine als Küchenmaschine zum Wiegen und/oder Kneten und/oder Garen und/oder Schroten und/oder Häckseln und/oder Mahlen ausgebildet ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: schematisch eine erfindungsgemäße Küchenmaschine mit einem Messrahmen,
- Fig. 2: einen anderen Messrahmen für eine erfindungsgemäße Küchenmaschine in der Draufsicht,
- Fig. 3: den anderen Messrahmen in einer perspektivischen Ansicht, und
- Fig. 4: den anderen Messrahmen in einer Seitenansicht.

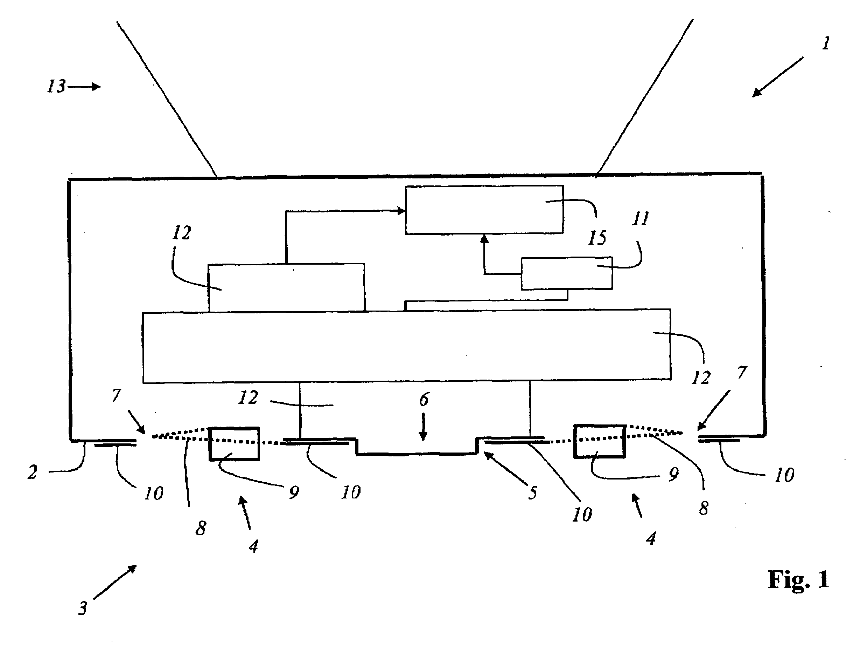

Fig. 1 zeigt schematisch eine erfindungsgemäße Küchenmaschine 1 mit einer Geräteunterseite 2, an der ein Messrahmen 3, der Kraftaufnehmer 4 aufweist, montiert ist. Der Messrahmen 3 weist eine Aussparung 5 auf, in der ein vorstehendes Teil 6 der Geräteunterseite 2 positioniert ist. Die Geräteunterseite 2 weist weitere Aussparungen 7 auf, in die bewegliche Bauteile der Kraftaufnehmer 4, nämlich Teile der Biegelemente 8 und der Standfüße 9, bei Gewichtsbelastung des Messrahmens 3 eintauchen. Die Kraftaufnehmer 4 sind als Planarwägezellen ausgebildet und an einem gemeinsamen Halterahmen 10 gefestigt. Der Halterahmen 10 ist wieder lösbar an die Geräteunterseite 2 geschraubt.

Die Küchenmaschine 1 weist ein Gefäß 13 zur Aufnahme und zum Verarbeiten von Rührgut, Häckselgut und Backgut auf. Bei einer Gewichtsänderung, beispielsweise durch Einfüllen von zu verarbeitendem Gut in das Gefäß 13, erzeugen die Kraftaufnehmer 4 des Messrahmens 3 Messsignale und senden diese per Funk an eine Auswertevorrichtung 11, die aus den Messsignalen einen Gewichtswert ermittelt und auf einer Universalanzeige 15 anzeigt. Die Auswertevorrichtung 11 steuert und regelt auch weitere Bauteile 12 des Gerätes, wie ein Rühr- und Häckselwerk und eine Backheizung, die bei der Herstellung nacheinander entlang einer Aufbaurichtung von unten nach oben eingebaut wurden. Der Messrahmen 3 ist als Modul entgegen der Aufbaurichtung von unten angebaut und daher leicht zu warten und mit geringem Aufwand austauschbar.

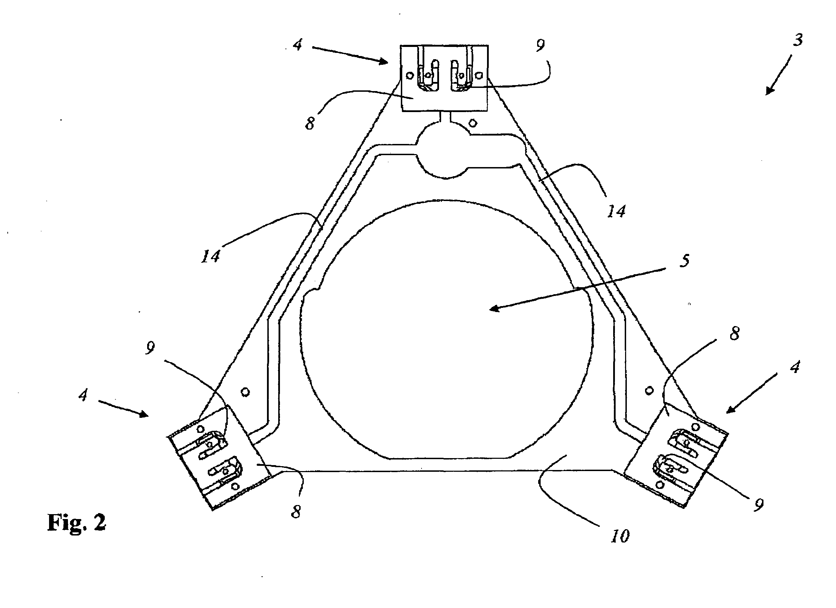

Fig. 2 zeigt einen anderen Messrahmen 3 für eine erfindungsgemäße Küchenmaschine in der Draufsicht. Die Kraftaufnehmer 4 sind im Dreieck an einem im Wesentlichen dreieckigen Halterahmen 10 befestigt. Der Halterahmen 10 weist in der Mitte eine Aussparung 5 auf, in der ein vorstehendes Teil der Geräteunterseite positionierbar ist. Die elektrischen Zuleitungen sind als Flachleitungen ausgeführt und in Nuten 14 auf der Oberseite des Halterahmens 10 verlegt. Die Kraftaufnehmer 4 sind als Planarwägezellen ausgeführt, die jeweils mit Dehnungsmessstreifen ausgerüsteten Biegeelemente 8 aufweisen Die Biegeelemente 8 sind aus Flachmaterial derart ausgeschnitten, dass die darunter befestigten Standfüße 9 parallelogrammartig verschwenkbar geführt sind.

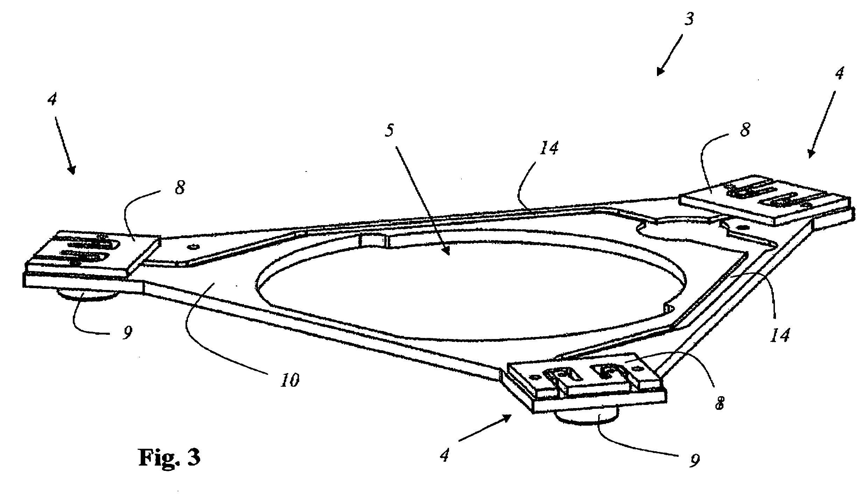

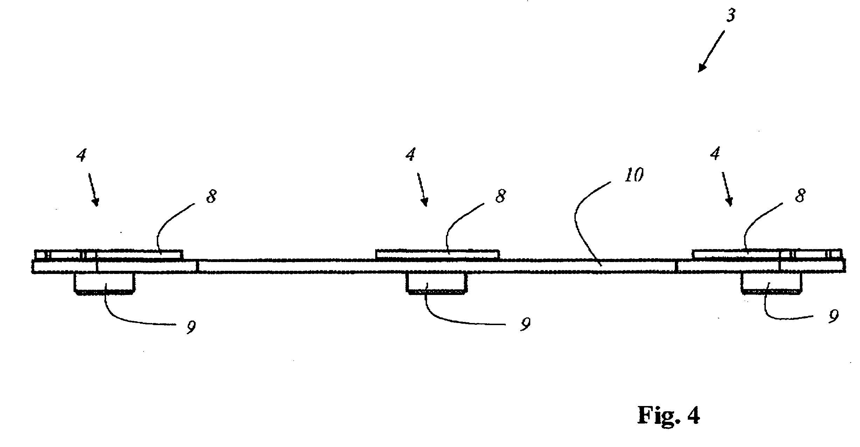

Die Figuren 3 und 4 zeigen den Messrahmen 3 in einer perspektivischen Ansicht und einer Seitenansicht. Vorzugsweise ist die Geräteunterseite derart ausgebildet, dass sie Ausnehmungen oder Aussparungen aufweist, in die die Biegeelemente 8 einführbar sind, so dass eine besonders geringe Bauhöhe erzielbar ist.

### Bezugszeichenliste

- 1: Küchenmaschine
- 2: Geräteunterseite
- 3: Messrahmen
- 4: Kraftaufnehmer
- 5: Aussparung
- 6: vorstehendes Teil
- 7: weitere Aussparungen
- 8: Biegelemente
- 9: Standfüße
- 10: Halterahmen
- 11: Auswertevorrichtung
- 12: weitere Bauteile
- 13: Gefäß
- 14: Nuten
- 15: Universalanzeige

## Patentansprüche

1. Küchenmaschine (1) mit einem Gehäuse und einer Geräteunterseite (2), **dadurch gekennzeichnet, dass** an der Geräteunterseite (2) ein Messrahmen (3) montiert ist, der einen Halterahmen (10), an dem Kraftaufnehmer (4) befestigt sind, aufweist, wobei die Küchenmaschine (1) keine im Gehäuse montierte Kraftaufnehmer aufweist.

2. Küchenmaschine (1) nach Anspruch 1, **dadurch gekennzeichnet, dass** der Messrahmen (3) zumindest eine Ausnehmung (5) oder zumindest eine Aussparung aufweist, in die bzw. in der zumindest ein vorstehendes Teil (6) der Geräteunterseite (2) positioniert ist und/oder positionierbar ist und/oder dass der Messrahmen zumindest eine Ausnehmung (5) oder zumindest eine Aussparung aufweist, in der ein vorstehendes Teil der Geräteunterseite (2) passgenau positioniert ist und/oder passgenau positionierbar ist.

3. Küchenmaschine (1) nach einem der Ansprüche 1 oder 2, **dadurch gekennzeichnet, dass** die Geräteunterseite (2) Aussparungen oder Ausnehmungen (7) aufweist, in die bewegliche Bauteile der Kraftaufnehmer einführbar sind und/oder dass die Geräteunterseite (2) Aussparungen oder Ausnehmungen aufweist, in die beweglich Bauteile der Kraftaufnehmer (4) durch Gewichtsbelastung des Messrahmens (3) eintauchen.

4. Küchenmaschine (1) nach einem der Ansprüche 1 bis 3, **dadurch gekennzeichnet, dass** die Küchenmaschine weitere Bauteile aufweist, die bei der Herstellung nacheinander entlang einer Aufbaurichtung von unten nach oben eingebaut wurden und dass der Messrahmen (3) entgegen der Aufbaurichtung von unten angebaut ist.

5. Küchenmaschine (1) nach einem der Ansprüche 1 bis 4, **dadurch gekennzeichnet, dass**
a. der Messrahmen (3) genau drei Kraftaufnehmer (4) aufweist oder dass der Messrahmen (3) genau drei Kraftaufnehmer (4) aufweist, wobei die Kraftaufnehmer (4) an den Ecken eines gedachten - vorzugsweise gleichseitigen - Dreiecks angeordnet sind, oder dass
b. der Messrahmen (3) genau vier Kraftaufnehmer (4) aufweist oder dass der Messrahmen (3) genau vier Kraftaufnehmer (4) aufweist, wobei die Kraftaufnehmer (4) an den Ecken eines Vierecks, insbesondere eines Quadrates, angeordnet sind.

6. Küchenmaschine (1) nach einem der Ansprüche 1 bis 5, **dadurch gekennzeichnet, dass** die Kraftaufnehmer (4) derart aufeinander abgestimmt und/oder derart kalibriert und/oder derart verschaltet sind, dass vom Messrahmen (3) Messsignale ausgehen, die ohne zusätzliche Kalibrations- oder Abgleichvorgänge auswertbar sind.

7. Küchenmaschine (1) nach einem der Ansprüche 1 bis 6, **dadurch gekennzeichnet, dass** der Halterahmen (10) eine Oberseite aufweist und dass Teile der Kraftaufnehmer bei Gewichtsbelastung des Halterahmens (10) über die Oberseite hinaus nach oben stehen.

8. Küchenmaschine (1) nach einem der Ansprüche 1 bis 7, **dadurch gekennzeichnet, dass** die Kraftaufnehmer (4) als Planarwägezellen ausgebildet sind.

9. Küchenmaschine (1) nach einem der Ansprüche 1 bis 8, **dadurch gekennzeichnet, dass** eine Auswertevorrichtung vorgesehen ist, die von den Kraftaufnehmern analoge Messwerte und/oder digitale Messsignale empfängt und dass eine Anzeigevorrichtung zum Anzeigen eines Gewichtswertes vorgesehen ist.

10. Küchenmaschine (1) nach Anspruch 9, **dadurch gekennzeichnet, dass** die Anzeigevorrichtung außer zur Anzeige eines Gewichtswertes zusätzlich zum Anzeigen anderer Informationen, beispielsweise eine Temperatur, eines Zeitraumes, einer Zutatenliste oder einer Uhrzeit, dient.

11. Küchenmaschine (1) nach einem der Ansprüche 1 bis 10, **dadurch gekennzeichnet, dass** zumindest ein Bedienknopf zum Bedienen und/oder Steuern des Messrahmens (3) und/oder der Auswertevorrichtung und/oder der Anzeigevorrichtung vorgesehen ist und dass der Bedienknopf außer zum Bedienen und/oder Steuern des Messrahmens und/oder der Auswertevorrichtung und/oder der Anzeigevorrichtung zusätzlich zum Steuern und/oder Auswählen von anderen Funktionen des Gerätes dient.

12. Küchenmaschine (1) nach Anspruch 11 **dadurch gekennzeichnet, dass** die Auswertevorrichtung und/oder die Anzeigevorrichtung und/oder der Bedienknopf oberhalb des Gerätebodens angeordnet sind und dass der Messrahmen (3) unterhalb des Gerätebodens angeordnet ist.

13. Küchenmaschine (1) nach einem der Ansprüche 1 bis 12, **dadurch gekennzeichnet, dass** die Küchenmaschine als Küchenmaschine zum Wiegen und/oder Kneten und/oder Garen und/oder Schroten und/oder Häckseln und/oder Mahlen ausgebildet ist.

14. Messrahmen (3) mit Kraftaufnehmern zum Herstellen - insbesondere durch Nachrüsten - eines Gerätes nach einem der Ansprüche 1 bis 13.

15. Verfahren zum Herstellen eines Küchengerätes (1) mit einem Gehäuse und einer Geräteunterseite **dadurch gekennzeichnet, dass** an die Geräteunterseite ein Messrahmen montiert wird, der einen Halterahmen (10), an dem Kraftaufnehmen (4) befestigt sind, aufweist, und weitere Bauteile nacheinander entlang einer Aufbaurichtung von unten nach oben eingebaut werden, wobei der Messrahmen entgegen der Aufbaurichtung von unten angebaut wird und keine Kraftaufnahmen im Gehäuse montiert werden.

## Claims

1. Kitchen machine (1) having a housing and an appliance bottom face (2), **characterized in that** a measurement frame (3) is fitted to the appliance bottom face (2), the said measurement frame having a holding frame (10) to which force sensors (4) are fastened, wherein the kitchen machine (1) does not have any force sensors fitted in the housing.

2. Kitchen machine (1) according to Claim 1, **characterized in that** the measurement frame (3) has at least one recess (5) or at least one cutout into which or in which at least one projecting part (6) of the appliance bottom face (2) is positioned and/or can be positioned, and/or **in that** the measurement frame has at least one recess (5) or at least one cutout in which a projecting part of the appliance bottom face (2) is positioned with a precise fit and/or can be positioned with a precise fit.

3. Kitchen machine (1) according to either of Claims 1 and 2, **characterized in that** the appliance bottom face (2) has cutouts or recesses (7) into which moving components of the force sensors can be inserted, and/or in that the appliance bottom face (2) has cutouts or recesses which moving components of the force sensors (4) enter due to weight loading of the measurement frame (3).

4. Kitchen machine (1) according to one of Claims 1 to 3, **characterized in that** the kitchen machine has further components which, during production, were installed in succession along an assembly direction from bottom to top, and **in that** the measurement frame (3) is mounted opposite to the assembly direction from below.

5. Kitchen machine (1) according to one of Claims 1 to 4, **characterized in that**
a. the measurement frame (3) has precisely three force sensors (4) or that the measurement frame (3) has precisely three force sensors (4), wherein the force sensors (4) are arranged at the corners of an imaginary - preferably equilateral - triangle, or **in that**
b. the measurement frame (3) has precisely four force sensors (4) or that the measurement frame (3) has precisely four force sensors (4), wherein the force sensors (4) are arranged at the corners of a rectangle, in particular of a square.

6. Kitchen machine (1) according to one of Claims 1 to 5, **characterized in that** the force sensors (4) are matched to one another in such a way and/or calibrated in such a way and/or interconnected in such a way that the measurement frame (3) emits measurement signals which can be evaluated without additional calibration or compensation processes.

7. Kitchen machine (1) according to one of Claims 1 to 6, **characterized in that** the holding frame (10) has a top face, and **in that** parts of the force sensors project upward beyond the top face in the event of weight loading of the holding frame (10).

8. Kitchen machine (1) according to one of Claims 1 to 7, **characterized in that** the force sensors (4) are in the form of planar weighing cells.

9. Kitchen machine (1) according to one of Claims 1 to 8, **characterized in that** an evaluation apparatus is provided, which evaluation apparatus receives analog measurement values and/or digital measurement signals from the force sensors, and **in that** a display apparatus is provided for displaying a weight value.

10. Kitchen machine (1) according to Claim 9, **characterized in that** the display apparatus, apart from serving to display a weight value, additionally serves to display other information, for example a temperature, a time period, an ingredients list or a time of day.

11. Kitchen machine (1) according to one of Claims 1 to 10, **characterized in that** at least one operator control knob is provided for operating and/or controlling the measurement frame (3) and/or the evaluation apparatus and/or the display apparatus, and **in that** the operator control knob, apart from serving to operate and/or control the measurement frame and/or the evaluation apparatus and/or the display apparatus, additionally serves to control and/or select other functions of the appliance.

12. Kitchen machine (1) according to Claim 11, **characterized in that** the evaluation apparatus and/or the display apparatus and/or the operator control knob are arranged above the appliance base, and **in that** the measurement frame (3) is arranged beneath the appliance base.

13. Kitchen machine (1) according to one of Claims 1 to 12, **characterized in that** the kitchen machine is in the form of a kitchen machine for weighing and/or kneading and/or cooking and/or crushing and/or chopping and/or grinding.

14. Measurement frame (3) having force sensors for producing - in particular by retrofitting - an appliance according to one of Claims 1 to 13.

15. Method for producing a kitchen appliance (1) having a housing and an appliance bottom face, **characterized in that** a measurement frame is fitted to the appliance bottom face, the said measurement frame having a holding frame (10) to which force sensors (4) are fastened, and further components are installed in succession along an assembly direction from bottom to top, wherein the measurement frame is mounted opposite to the assembly direction from below, and no force sensors are fitted in the housing.

## Revendications

1. Machine de cuisine (1) comprenant un boîtier et un côté inférieur d'appareil (2), **caractérisée en ce qu'**un cadre de mesure (3) est monté sur le côté inférieur d'appareil (2), lequel cadre de mesure comprend un cadre de retenue (10) sur lequel sont fixés des capteurs de force (4), la machine de cuisine (1) ne comprenant aucun capteur de force monté dans le boîtier.

2. Machine de cuisine (1) selon la revendication 1, **caractérisée en ce que** le cadre de mesure (3) comprend au moins un creux (5) ou au moins un évidement, dans lequel au moins une partie saillante (6) du côté inférieur d'appareil (2) est positionnée et/ou peut être positionnée, et/ou **en ce que** le cadre de mesure comprend au moins un creux (5) ou au moins un évidement dans lequel une partie saillante du côté inférieur d'appareil (2) est positionnée exactement et/ou peut être positionnée exactement.

3. Machine de cuisine (1) selon l'une quelconque des revendications 1 et 2, **caractérisée en ce que** le côté inférieur d'appareil (2) comprend des évidements ou des creux (7) dans lesquels des composants mobiles des capteurs de force peuvent être insérés, et/ou **en ce que** le côté inférieur d'appareil (2) comprend des évidements ou des creux dans lesquels des composants mobiles des capteurs de force (4) peuvent pénétrer sous l'effet de la charge de poids du cadre de mesure (3).

4. Machine de cuisine (1) selon l'une quelconque des revendications 1 à 3, **caractérisée en ce que** la machine de cuisine comprend des composants supplémentaires qui, lors de la production, ont été installés les uns après les autres le long d'un sens de construction du bas vers le haut, et **en ce que** le cadre de mesure (3) est monté en sens inverse au sens de construction à partir du bas.

5. Machine de cuisine (1) selon l'une quelconque des revendications 1 à 4, **caractérisée en ce que** a. le cadre de mesure (3) comprend exactement trois capteurs de force (4) ou **en ce que** le cadre de mesure (3) comprend exactement trois capteurs de force (4), les capteurs de force (4) étant disposés aux coins d'un triangle imaginaire, de préférence équilatéral, ou **en ce que** b. le cadre de mesure (3) comprend exactement quatre capteurs de force (4) ou **en ce que** le cadre de mesure (3) comprend exactement quatre capteurs de force (4), les capteurs de force (4) étant disposés aux coins d'un rectangle, en particulier d'un carré.

6. Machine de cuisine (1) selon l'une quelconque des revendications 1 à 5, **caractérisée en ce que** les capteurs de force (4) sont adaptés les uns aux autres et/ou sont étalonnés et/ou sont connectés de telle sorte que des signaux de mesure soient émis par le cadre de mesure (3), lesquels signaux de mesure peuvent être évalués sans opérations d'étalonnage ou de compensation supplémentaires.

7. Machine de cuisine (1) selon l'une quelconque des revendications 1 à 6, **caractérisée en ce que** le cadre de retenue (10) comprend un côté supérieur, et **en ce que** des parties des capteurs de force font saillie vers le haut au-delà du côté supérieur en cas de charge de poids du cadre de retenue (10).

8. Machine de cuisine (1) selon l'une quelconque des revendications 1 à 7, **caractérisée en ce que** les capteurs de force (4) sont réalisés sous forme de cellules de pesage planes.

9. Machine de cuisine (1) selon l'une quelconque des revendications 1 à 8, **caractérisée en ce qu'**un dispositif d'évaluation est prévu, lequel reçoit des valeurs de mesure analogiques et/ou des signaux de mesure numériques en provenance des capteurs de force, et **en ce qu'**un dispositif d'affichage pour afficher une valeur de poids est prévu.

10. Machine de cuisine (1) selon la revendication 9, **caractérisée en ce qu'**en plus de l'affichage d'une valeur de poids, le dispositif d'affichage sert en outre à afficher d'autres informations, par exemple une température, un laps de temps, une liste d'ingrédients ou une heure.

11. Machine de cuisine (1) selon l'une quelconque des revendications 1 à 10, **caractérisée en ce qu'**au moins un bouton de commande pour commander et/ou régler le cadre de mesure (3) et/ou le dispositif d'évaluation et/ou le dispositif d'affichage est prévu, et **en ce qu'**en plus de la commande et/ou du réglage du cadre de mesure et/ou du dispositif d'évaluation et/ou du dispositif d'affichage, le bouton de commande sert en plus à régler et/ou à sélectionner d'autres fonctions de l'appareil.

12. Machine de cuisine (1) selon la revendication 11, **caractérisée en ce que** le dispositif d'évaluation et/ou le dispositif d'affichage et/ou le bouton de commande sont disposés au-dessus du fond de l'appareil, et **en ce que** le cadre de mesure (3) est disposé en dessous du fond de l'appareil.

13. Machine de cuisine (1) selon l'une quelconque des revendications 1 à 12, **caractérisée en ce que** la machine de cuisine est réalisée sous forme de machine de cuisine pour le pesage et/ou le pétrissage et/ou la cuisson et/ou le broyage et/ou le hachage et/ou la mouture.

14. Cadre de mesure (3) comprenant des capteurs de force pour produire, en particulier par rééquipement, un appareil selon l'une quelconque des revendications 1 à 13.

15. Procédé de production d'un appareil de cuisine (1) comprenant un boîtier et un côté inférieur d'appareil, **caractérisé en ce qu'**un cadre de mesure, qui comprend un cadre de retenue (10) sur lequel sont fixés des capteurs de force (4), est monté sur le côté inférieur d'appareil et des composants supplémentaires sont installés les uns après les autres le long d'un sens de construction du bas vers le haut, le cadre de mesure étant monté en sens inverse au sens de construction à partir du bas, et aucun capteur de force n'étant monté dans le boîtier.
